# EUROPEAN PATENT APPLICATION

(11) **EP 3 742 253 A1**
(43) Date of publication of application: **25.11.2020**
(21) Application number: 19199039.9
(22) Date of filing: 23.09.2019
(51) Int. Cl.: G06F 1/16, G03B 11/04, H04N 5/225

(54) **LENS COVER STRUCTURE OF ELECTRONIC PRODUCT**

(30) Priority: 22.05.2019 TW 108206389 U
(71) Applicant: CAL-COMP BIG DATA, INC, Shenkeng, New Taipei City 222 (TW)
(72) Inventor: Hung, Ming-Hua, New Taipei City 222 (TW)
(74) Representative: 2K Patentanwälte Blasberg Kewitz & Reichel

(57) **Abstract**

A lens cover structure of an electronic product includes a casing body (1), an actuating mechanism (2), and a push switch (3). The casing body (1) has hole edges (100), (110), and a lens (12) installed into each hole edge (100), (110). The actuating mechanism (2) includes a button (20), and a shield (21) actuated by a button (20) at each hole edge (100), (110) and having a pivot end (210) and a stop end (211) disposed opposite to and away from each other. The shield (21) uses the pivot end (210) as a center to swing the stop end (211) to cover the front of the lens (12) or swing away from the lens (12). The push switch (3) is installed in the casing body (1) and actuated by the button (20) to achieve the effect of positioning the button (20).

## Description

### BACKGROUND OF THE INVENTION

### 1. Technical Field

The technical field relates to a lens, and more particularly to a lens cover structure of an electronic product.

### 2. Description of Related Art

At present, many electronic products are equipped with a lens for capturing an image such as taking a picture or scanning an identification code. In order to reduce the chance of the lens to be in contact with the outside and prevent dust or dirt from remaining on the lens that may affect the photographing and recognition functions, or prevent a person's privacy from being exposed by touching a button by mistake. Therefore, a lens cover is generally installed in front of the lens to avoid the aforementioned issues.

However, the conventional lens cover is limited by its structural design, and thus the coverage of the lens is also limited. If a larger lens is used, the covering or the opening effect will be incomplete, and it often will need to design different structures according to the size of the lens and lead to a relatively more inconvenient production and a relatively higher production cost since related components are incompliance with the commercially available specifications.

In view of the aforementioned drawbacks of the prior art, the discloser of this disclosure based on years of experience in the related industry to conduct extensive research and experiment, and finally provided a feasible solution as disclosed in this disclosure to overcome the drawbacks of the prior art.

### SUMMARY OF THE INVENTION

Therefore, it is a primary object of this disclosure to provide a lens cover structure of an electronic product, wherein the structural design of the lens cover structure has the advantages of easy production and simple components and achieves the effect of covering and opening the lens with a stroke totally corresponsive to the size of the lens.

To achieve the aforementioned and other objectives, this disclosure discloses a lens cover structure of an electronic product, comprising: a casing body, an actuating mechanism, and a push switch, wherein the casing body has a hole edge, and a lens installed in the hole edge, and the actuating mechanism includes a button, and a shield actuated by the button, and the button is disposed at the hole edge, and the shield has a pivot end and a stop end disposed opposite to and away from each other, and the shield actuated by the button uses the pivot end as a center to swing the stop end to cover the front of the lens or to swing away from the lens, and the push switch is installed in the casing body and actuated by the button to provide the effect of positioning the button.

### BRIEF DESCRIPTION OF THE DRAWINGS

FIG. 1 is a perspective view of an electronic product of this disclosure;
FIG. 2 is an exploded view of an electronic product installed with a lens in accordance with this disclosure;
FIG. 3 is a cross-sectional view of the interior of an electronic product of this disclosure;
FIG. 4 is a schematic planar view showing an electronic product of this disclosure before operating; and
FIG. 5 is a schematic planar view showing an electronic product of this disclosure after operating.

### DESCRIPTION OF THE PREFERRED EMBODIMENTS

The technical contents of this disclosure will become apparent with the detailed description of preferred embodiments accompanied with the illustration of related drawings as follows. It is intended that the embodiments and drawings disclosed herein are to be considered illustrative rather than restrictive.

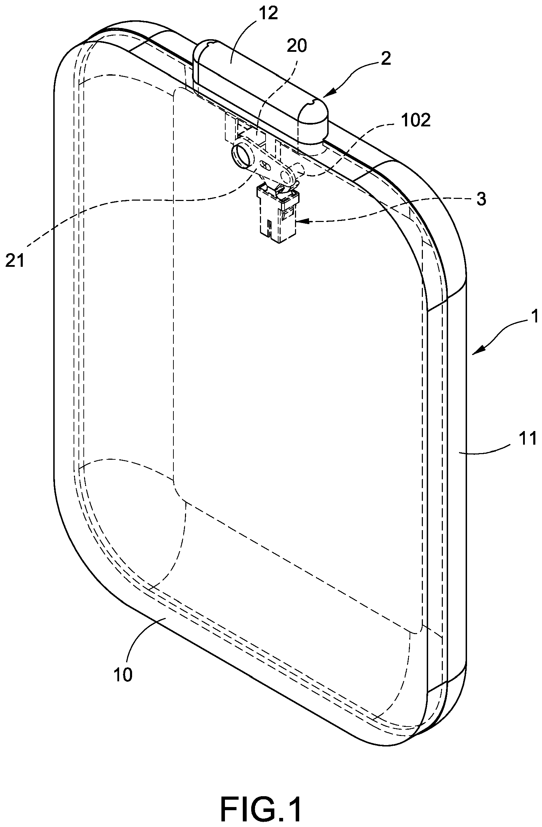

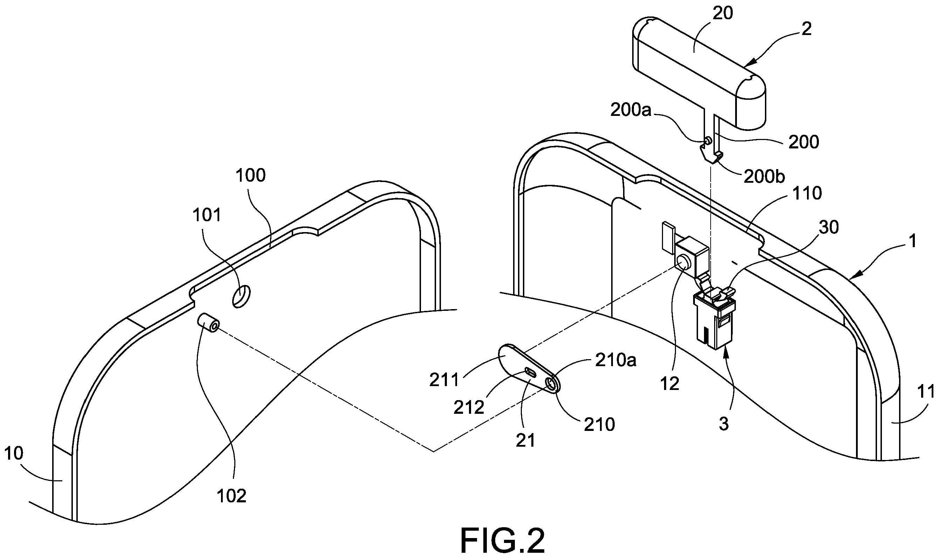

With reference to FIGS. 1 and 2 for a perspective view of an electronic product and an exploded view of the electronic product installed with a lens in accordance with this disclosure respectively, a lens cover structure of the electronic product comprises a casing body 1, an actuating mechanism 2, and a push switch 3.

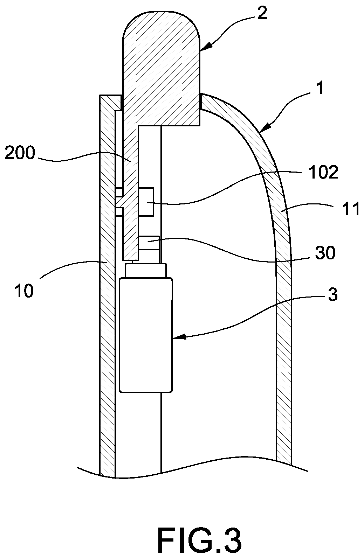

The casing body 1 is a casing of the electronic product. The electronic product is a mobile phone, a tablet PC, or an electronic screen mirror with a lens, and the casing body 1 is formed by engaging a front casing 10 with a rear casing 11 (as shown in FIG. 3), and the casing body 1 has a lens 12 installed therein and disposed at an upper edge of the casing body 1. In an embodiment of this disclosure, the casing body 1 have hole edges 100, 110 concavely formed at the upper edges of the front casing 10 and the rear casing 11 respectively, and the lens 12 is disposed under the hole edge 110 of the rear casing 11, and the front casing has a through hole 10110 formed at a position corresponding to the lens 12 and provided for passing the lens 12 through the through hole 101 to capture a required image.

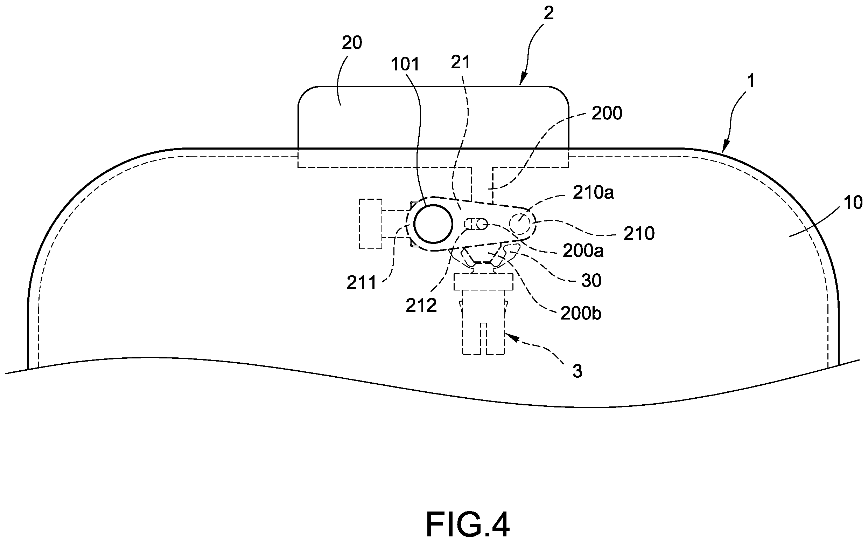

The actuating mechanism 2 comprises a button 20, and a shield 21 actuated by the button 20 and serving as a lens cover, and the button 20 is disposed at the hole edge 100, 110 of the casing body 1, and the shield 21 has a pivot end 210 and a stop end 211 disposed opposite to and away from each other. In an embodiment of this disclosure, the button 20 has a driving rod 200 extending in a pressing direction and precisely passing through a side of the lens 12, and the driving rod 200 pressed by the button 20 can drive the shield 21 to move, while driving the push switch 3 as well. With reference to FIG. 4 for more details, the driving rod 200 has a connecting portion 200a disposed thereon, and the shield 21 has a swing slot 212 formed thereon and intersecting with the extending direction of the driving rod 200, and the connecting portion 200a is disposed in the swing slot 212, so that when the button 20 is pressed, the connecting portion 200a is moved in the swing slot 212 to force the shield 21 to move and swing.

The push switch 3 is a switch having a Push-Push function and installed in the casing body 1. When the button 20 of the actuating mechanism 2 is actuated, a push-push positioning effect of the button 20 is provided. In an embodiment of this disclosure, the push switch 3 further has a combining portion 30, and the driving rod 200 of the button 20 extends in a direction towards the push switch 3, and a latch 200b is disposed at an end of the driving rod 200 and latched with the combining portion 30 to ensure that the button 20 can drive the push switch 3 when it is pressed. When the button 20 is pressed for a first time, the driving rod 200 moves along the pressing direction to latch the latch 200b with the combining portion 30 and trigger the push switch 3 to be positioned; when the button 20 is pressed again, the driving rod 200 triggers the push switch 3 again to release the positioning, and the combining portion 30 drives the driving rod 200 to prop the button 20 and return the button 20 to its initial position.

The aforementioned structural composition constitutes the lens cover structure of this disclosure.

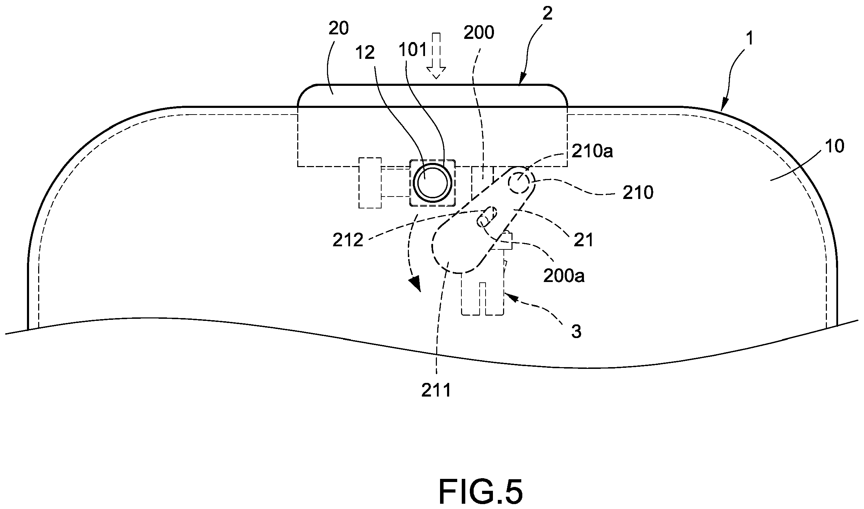

In FIG. 4, when the lens is not in use, the stop end 211 of the shield 21 covers the front of the lens 12, so that the lens 12 cannot capture any external image through the through hole 101. In FIG. 5, when it is necessary to use the lens 12, a user simply presses the button 20, so that the driving rod 200 of the button 20 drives the shield 21 to swing, and the stop end 211 of the shield 21 swings away from the lens 12, and the lens 12 can be used to capture images through the through hole 101 normally. In FIGS. 1 and 3, the pivot end 210 of the shield 21 is pivotally coupled to the casing body 1. For example, the pivot 102 is installed on an inner surface of the front casing 10, and the pivot end 210 is pivotally coupled to the pivot hole 210a, so that the pivot end 210 of the shield 21 can use the casing body 1 as a fulcrum for the swing.

In the lens cover structure of the electronic product of this disclosure, the shield 21 is swung, and the stroke of the swing that determines whether or not the lens 12 can be covered can be increased by a larger swing amplitude, so that the lens cover structure is applicable for a larger lens 12. In other words, the distance between the pivot end 210 and the stop end 211 of the shield 21 determines the swing amplitude of the stop end 211. If the distance from the pivot end 210 to the stop end 211 is larger, the swing amplitude will be larger and the lens cover structure will be applicable for a larger lens 12. As a result, this disclosure is not limited by the specification of the push switch 3 and capable of providing its use for a larger lens 12. The structure of the shield 21 allows an easier production and a more flexible change and incurs a lower cost, so that the production cost can be reduced significantly.

## Claims

1. A lens cover structure of an electronic product, comprising:
a casing body (1), having a hole edge (100), (110) formed thereon, and a lens (12) installed in the hole edge (100), (110);
an actuating mechanism (2), including a button (20) at the hole edge (100), (110), and a shield (21) actuated by the button (20) and having a pivot end (210) and a stop end (211) disposed opposite to and away from each other, and the shield (21) actuated by the button (20) using the pivot end (210) as a center to swing the stop end (211) to cover the lens (12) or to swing away from the lens (12); and
a push switch (3), installed in the casing body (1), and actuated by the button (20) to provide the effect of positioning the button (20).

2. The lens cover structure of an electronic product according to claim 1, wherein the casing body (1) is a casing of an electronic product including a mobile phone, a tablet PC, or an electronic screen mirror.

3. The lens cover structure of an electronic product according to claim 1, wherein the casing body (1) is formed by engaging a front casing (10) and a rear casing (11).

4. The lens cover structure of an electronic product according to claim 3, wherein the hole edge (100), (110) is formed between the front casing (10) and the rear casing (11).

5. The lens cover structure of an electronic product according to claim 3, wherein the front casing (10) has a through hole (101) formed at a position corresponding to the lens (12).

6. The lens cover structure of an electronic product according to claim 3, wherein the front casing (10) has a pivot (102) installed therein, and the pivot end (210) of the shield (21) has a pivot hole (210a) for pivotally coupling the pivot (102).

7. The lens cover structure of an electronic product according to claim 1, wherein the button (20) has a driving rod (200) extending in a pressing direction for the button (20), and the driving rod (200) drives the shield (21) to move, so as to drive the push switch (3).

8. The lens cover structure of an electronic product according to claim 7, wherein the driving rod (200) has a connecting portion (200a) disposed thereon, and the shield (21) has a swing slot (212) formed thereon and intersecting the extending direction of the driving rod (200), and the connecting portion (200a) is disposed in the swing slot (212).

9. The lens cover structure of an electronic product according to claim 7, wherein the driving rod (200) of the button (20) extends in a direction towards the push switch (3).

10. The lens cover structure of an electronic product according to claim 9, wherein the push switch (3) has a combining portion (30), and the driving rod (200) has a latch (200b) disposed at an end thereof and latched with the combining portion (30).
